Europäisches Patentamt

European Patent Office

Office européen des brevets

(11) Publication number: **0 237 205 B1**

# EUROPEAN PATENT SPECIFICATION

(45) Date of publication of patent specification: **17.04.91**

(51) Int. Cl.⁵: **F02B 77/00**, F01M 11/00, F02B 77/13

(21) Application number: **87301342.9**

(22) Date of filing: **17.02.87**

(54) Oil pan isolation mounting and seal.

(30) Priority: **06.03.86 US 836552**

(43) Date of publication of application:
**16.09.87 Bulletin 87/38**

(45) Publication of the grant of the patent:
**17.04.91 Bulletin 91/16**

(84) Designated Contracting States:
**DE FR GB**

(56) References cited:
**FR-A- 2 357 736
FR-A- 2 398 887
GB-A- 2 052 388**

**PATENT ABSTRACTS OF JAPAN, vol. 8, no.
87 (M-291)[1524], 20th April 1984; & JP-A-59
3117 (TOYO KOGYO K.K.) 09-01-1984**

(73) Proprietor: **DETROIT DIESEL CORPORATION
(Delaware Corp.)
13400 West Outer Drive
Detroit Michigan 48228(US)**

(72) Inventor: **Lopez-Crevillen, Jose Manuel
1353 Windham
Westland Michigan 48185(US)**

(74) Representative: **Wharton, Peter Robert et al
Urquhart-Dykes & Lord Alliance House 29-31
Kirkgate
Bradford West Yorkshire, BD1 1QB(GB)**

## Description

OIL PAN ISOLATION MOUNTING AND SEAL

This invention relates to a resilient vibration-absorbing seal as specified in the preamble of claim 1, for example as disclosed in US-A-4 394 853.

The invention also relates to an engine having such a seal to provide a vibration-isolating and sound-deadening mounting for an oil pan (sump) of the engine, as specified in claim 3.

The said US-A-4 394 853 and also US-A-4 423 707 represent examples of various arrangements and means which have been proposed for mounting oil pans and other components in sound-deadening vibration isolation from the main frame or block of an internal combustion engine, and which are becoming well-known in the art.

An isolation mounting for attaching a crankcase to an engine block is illustrated in FR-A-2 357 736 in which a seal has portions which extend partially into of the crankcase mounting flange hole from the top and in which separate grommets are provided which extend partially into the crankcase holes from the bottom. Both the seal extensions and the grommets cooperate to isolate the attachment bolts.

The present invention is primarily concerned with a resilient vibration-absorbing seal arrangement forming an additional mounting provision and representing means for vibration-isolation mounting of an engine oil pan to an engine frame or block.

The invention is also concerned with the provision of a sound-deadening vibration-isolating strip seal with fastener openings at which are located flange opening-guiding or gripping extensions that locate the seal on an oil pan and provide isolation of the flange from fasteners that extend through the openings.

To these ends a resilient vibration-absorbing seal in accordance with the present invention is characterised by the features specified in the characterising portion of claim 1.

In a preferred arrangement of an engine in accordance with the present invention, an oil pan flange and associated seal have aligned fastener openings guiding on sleeve-like cylindrical projection portions of the seal. Grommet-like retainers on the projections, or alternatively co-operation of the projections with seal-engaged bolt bodies, act to retain the seal against the oil pan flange during installation of the pan on an engine frame or block.

In the drawings:

Figure I is a fragmentary elevational view showing the lower portion of an engine assembly having a frame-carried oil pan with a vibration-isolation mounting and seal in conformity with the present invention;

Figure 2 is a fragmentary sectional view, with parts in elevation, of the oil pan and seal assembly looking downwardly from the plane indicated by the line 2--2 of Figure I, and thus in the direction of the arrows;

Figure 3 is a fragmentary transverse sectional view, with parts in elevation, through one of a plurality of fastener openings, from the plane of the line 3--3 of Figure 2, in the direction of the arrows;

Figure 4 is a fragmentary transverse sectional view between fastener openings from the plane of the line 4--4 of Figure 2, in the direction of the arrows;

Figure 5 is a fragmentary transverse cross-sectional view of the oil pan and seal assembly prior to its attachment to the engine frame;

Figure 6 is a diametral cross-sectional view of a dished isolator washer of a type as shown in the assembly of Figure 3;

Figure 7 is a view similar to Figure 3 but showing an alternative embodiment of an isolation mounting in conformity with the present invention;

Figure 8 is a transverse cross-sectional view of a reversible seal configured for use in the isolation mounting shown in Figure 7; and

Figure 9 is a diametral cross-sectional view of a flat isolator washer of a type as shown in the isolation mounting of Figure 7.

With reference first to Figures I to 6 of the drawings, reference numeral I0 generally indicates an internal combustion engine having a frame II including a generally flat oil pan-supporting lower surface I2 to which an oil pan I4 is attached by isolation mounting means in conformity with the present invention.

The oil pan as shown is made of formed sheet steel, although other materials and methods of forming could be used if desired.

The pan I4 is formed as an open-topped downwardly closed container terminating upwardly in an outwardly extending peripheral flange I5. The flange I5 has generally coplanar inner and outer upper edges I6,I8 respectively, lying along opposite sides of a recessed seal-receiving portion I9 that extends the length of the flange. The recessed portion I9 receives a peripheral seal 20 and also stiffens the flange against bending by providing a dished (U-shaped) cross-section. A plurality of fastener-receiving openings 22 pierce the flange in the recessed portion at spaced intervals around the periphery. In assembly, the openings 22 align with corresponding threaded bores 23 in the frame II, opening through the lower surface I2.

The seal 20 is a continuous resilient vibration-absorbing member, preferably moulded from silicone rubber, or made in any suitable manner from any acceptable material. The seal 20, which is seen in cross-section compressed in Figures 3 and 4 and uncompressed in Figure 5, has a flattened top 24 connected by means of sloping sides 26 to a flattened V-like lower portion 27 formed to fit within the recessed seal-receiving portion 19 of the flange 15.

Fastener openings 28 extend through the seal 15 at locations aligned in assembly with the oil pan and engine block (frame) openings.

At each of the fastener openings 28 in the seal 15, sleeve-like tubular extensions 30 create cylindrical portions extending downwardly from the seal lower portion 27 and protruding, in assembly, through the oil-pan flange openings 22. Enlarged lower edges of the tubular extensions 30 preferably form sharp-edged grommet-like retainers 31 that are slightly larger in diameter than the oil-pan flange openings 22 and are deformable to pass therethrough In this manner the seal may be retained on the oil pan prior to and during assembly of the oil pan to the engine frame. The seal is preferably additionally provided with tubular inserts 32 moulded into the cylindrical extensions 30, to stiffen the extensions for when they are forced into the oil-pan flange openings 22.

In assembly, the oil pan 14 is secured to the lower surface 12 of the engine frame 11 by means of fasteners in the form of shoulder bolts 34, or equivalent bolt-sleeve assemblies, which pass through and engage rubber-metal isolator washers 35, thereby holding them in engagement with the lower side of the oil-pan flange 15. The fastener bolts 34 also extend through the oil pan 14 and the openings 22,28 in the seal 20, and thence into engagement with the threaded bores 23 of the engine frame. The enlarged shoulders 36 of the bolts 34 engage the lower surface 12 of the engine frame to limit compression of the seal 20 and the isolator washers 35, so as to provide optimum vibration isolation of the oil pan from the engine frame 11.

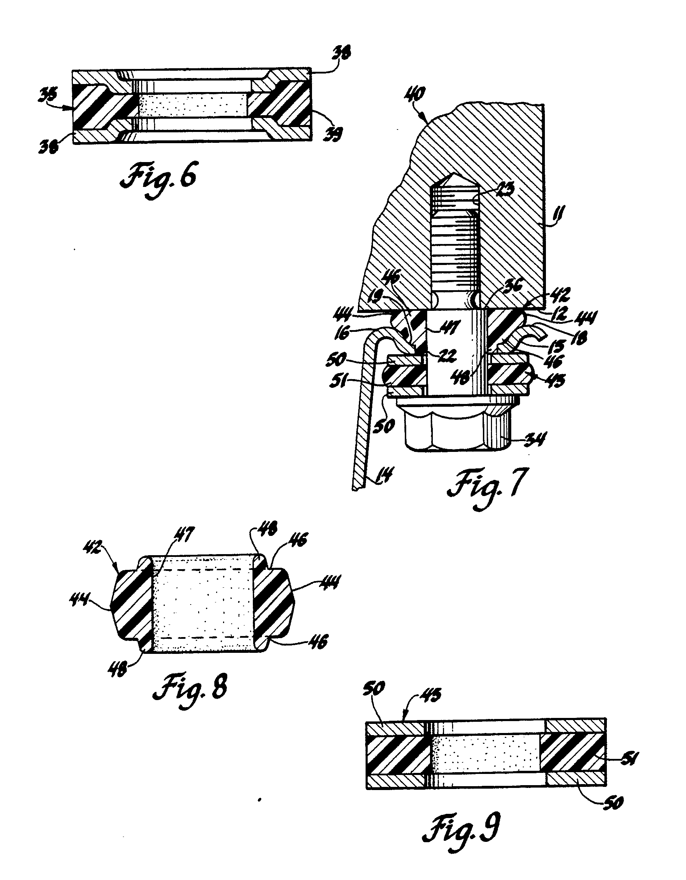

The isolator washers 35, as shown in Figure 6, are formed from dished metal washers 38 moulded with a rubber washer 39 between them. The openings through the rubber washers 39 and the moulded seal 20 are all smaller than the corresponding openings in the metal washers 38 and in the oil-pan flange 15, at least when the rubber portions are compressed in assembly, and preferably also prior to assembly, as seen in Figures 5 and 6. The contacting metal portions of the frame 11, the bolts 34 and the lower washers 38 are thereby positively isolated by rubber from the oil-pan flange 15 and from the upper washers 38 which the flange 15 contacts.

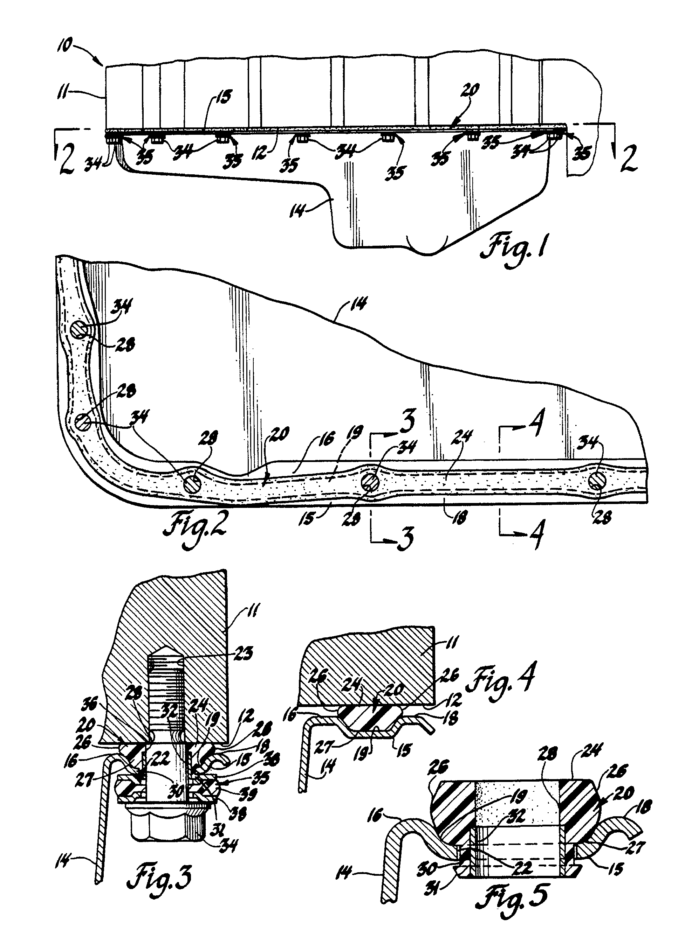

To assemble the oil pan 14 to the frame 11 in the embodiment shown in Figures 1 to 6, the seal 20 is first located in position on the oil-pan flange 15 and the tubular protrusions 30 are forced into the oil-pan openings 22, with the use of an insertion tool if necessary. Upon such insertion, the grommet-like retainers 31 expand to hold the seal 20 in place on the flange 15, as shown in Figure 5. The oil pan and seal assembly is then positioned against the frame surface 12, and the bolts 34 and the washers 35 are installed and tightened. The recesses formed at the inner diameters of the dished washers 38 provide clearance for the seal retainers 31, which extend below the oil-pan flange 15.

With reference now to Figures 7 to 9 of the drawings, there is shown an alternative embodiment of an isolation mounting applied to an engine generally indicated by reference numeral 40. Like reference numerals are used for the illustrated portions of the engine frame 11, oil pan 14 and shoulder bolts 34, since they are unchanged from the first embodiment. The altered components comprise a resilient vibration-absorbing seal 42, which is shown separately in Figure 8, and isolator washers 43, which are shown separately in Figure 9.

The resilient seal 42 includes angled sides 44 which interconnect identical flattened upper and lower portions 46 having spaced fastener openings 47 extending therethrough. Tubular protrusions forming sleeve-like cylindrical extensions 48 are provided on both the upper and lower portions 46 at each opening 47. These extensions 48 are long enough to protrude into the oil-pan flange openings 22, but either they do not extend through these openings or alternatively they do not extend very far through the openings.

The seal 42 may be installed with either portion 46 against the oil-pan flange 15, since the fastener-receiving hole patterns are symmetrical. The extensions 48 on the lower portion locate the seal 42 in the oil-pan openings. The shoulder bolts 34 and the washers 43 are then installed. Since the fastener openings 47 in the seal 42 are made smaller than the shoulders 36 of the bolts 34, the bolts are gripped by the seal, thereby holding all the components in assembly while the oil pan is aligned with the engine frame 11 and the bolts 34 are threaded into the bores 23.

The isolator washers 43 are made with flat metal washers 50, since there is no need to provide clearance for seal retainers (not present in this embodiment). However, the dished washers 35 of the first embodiment could be substituted for the washers 43 if desired.

In assembly, as shown in Figure 7, the bolts 34 compress the seal 42 by an amount that is controlled by the shoulder bolts but is sufficient to flatten the extensions 48 on the upper side (that is, the frame side) of the seal 42 while the extensions 48 on the lower, flange-engaged side protrude into the flange openings 22.

The rubber washers 5I of the isolator washers 43 are again made with smaller inner diameters than the metal washers 50, to keep the bolts from grounding against (that is, contacting) the metal washers 50, and thus completely isolating the oil pan and frame by means of rubber members.

Thus in the embodiments which have been described, sleeve-like extensions 30 (48) extend through openings 22 in the flange I5 to guide or position the seal 20 (42) on the flange and hold the edges of the flange away from contact with the bolts 34 that fix the oil pan I4 to the engine frame II of the crankcase.

Additionally, isolator washers 35 (43) have rubber-washer centres 39 (5I) that engage the bolts 34 to hold them away from the metal washers 38 (50) of the isolators. In the embodiment shown in Figures I to 6, retainers 3I formed by grommet-like enlargements help to hold the seal to the oil pan flange prior to assembly. The seal openings may be sized to grip the fasteners during asembly, to hold the bolts in place before tightening.

## Claims

1. An engine having a crankcase (11) with a peripheral wall having a lower edge including a mounting surface (12) and openings (23) through the surface,
a downwardly closed oil pan (14) having a peripheral flange (15) extending outwardly from open upper edges of the oil pan (14) and mounted in opposed sealing relation to the crankcase wall mounting surface (12), the flange (15) including openings (22) aligned with the crankcase openings (23), and
fasteners (34) extending through the aligned openings (22,23) to attach the oil pan (14) to the crankcase (11), an arrangement for sound-deadening vibration-isolation mounting of the oil pan to the crankcase including a resilient vibration-absorbing seal (20) compressed between the oil pan flange (15) and the crankcase wall mounting surface (12), the seal (20) comprising a band of vibration-absorbing resilient material having upper (24) and lower (27) surfaces, and including a plurality of longitudinally spaced fastener openings (28) that extend through the upper (24) and lower (27) surfaces of the seal (20) and are aligned with the openings (22,23) in the oil pan flange (15) and in the crankcase (11).
characterised by the seal (20) including cylindrical portions (30) which extend below the lower surfaces (27) around the fastener openings (28), completely through the respective flange openings (22) around the respective fastener body portions, and below the oil pan flange (15) to prevent contact between the fasteners (34) and the oil pan flange (15), to thereby isolate the oil pan (14) from vibration-transmitting engagement with the crankcase (11) and the attached fasteners (34).

2. An engine according to claim 1, further characterised by the cylindrical portions (30) of the seal (20) which extend below the oil pan flange (15) having enlarged lower edges forming grommet-like retainers (31) to secure the seal (20) to the oil pan flange (15) prior to assembly of the oil pan (14) to the crankcase (11).

3. An engine according to claim 2, further characterised by the openings (28) in the seal (20) being sized to grip the body portions of the fasteners (34) and thereby retain the fasteners (34) in the assembled position on the oil pan (14) prior to assembly to the crankcase (11).

4. An engine according to claim 1, 2 or 3, further characterised by isolator means (35) including a resilient supporting elements (39), which are located below and engaging the oil pan flange (15), have openings therethrough aligned with each of the flange openings (22) and are engaged and compressed by the fasteners (34) to support the oil pan (14) , and by the fasteners (34) including an enlarged body portion seated against the crankcase wall (12) adjacent the crankcase openings (23) to limit the compression of the seal (20) and the isolator means (35).

5. An engine according to claim 4, further characterised by the isolator means (35) comprising sandwich washers having a pair of metal washer elements (38) separated by the resilient supporting elements (39), the openings through the supporting elements (39) being smaller in diameter than aligned openings in the metal washer elements (38), to prevent contact between the metal washer elements (38) and the fasteners (34).

## Revendications

1. Moteur comprenant un bloc-cylindres (11), comportant une paroi périphérique présentant un bord inférieur pourvu d'une surface d'assemblage (12) et de trous (23) ménagés dans cette surface, un carter d'huile (14), fermé à sa partie inférieure et comportant un rebord périphérique (15) qui s'étend vers l'extérieur à partir des bords supérieurs de l'ouverture de ce carter d'huile (14) et qui est assemblé suivant une disposition relative d'étanchéité face à face par rapport à la surface d'assemblage (12) de la paroi du bloc-cylindres, ce rebord (15) comportant des trous (22) alignés avec les trous (23) du bloc-cylindres, et des organes de fixation (34) traversant les trous alignés (22, 23) de façon à fixer le carter d'huile (14) sur le bloc-cylindres (11), tandis qu'un agencement d'assemblage insonorisé et antivibratoire du carter d'huile sur le bloc-cylindres comprend un joint d'étanchéité (20), élastique et absorbant les vibrations, qui est comprimé entre le rebord (15) du carter d'huile et la surface d'assemblage (12) de la paroi du bloc-cylindres, ce joint d'étanchéité (20) étant constitué d'une bande de matériau élastique, absorbant les vibrations et présentant des surfaces supérieure (24) et inférieure (27) et comportant, espacés longitudinalement, plusieurs trous (28), pour organe de fixation, qui traversent les surfaces supérieure (24) et inférieure (27) de ce joint d'étanchéité (20) et sont alignés avec les trous (22, 23) ménagés dans le rebord (15) du carter d'huile et dans le bloc-cylindres (11), caractérisé en ce que le joint d'étanchéité (20) comporte des parties cylindriques (30) qui s'étendent au-dessous des surfaces inférieures (27), autour des trous (28) pour organe de fixation, traversent complètement les trous (22) correspondants du rebord, autour des parties correspondantes de corps des organes de fixation, et s'étendent audessous du rebord (15) du carter d'huile, de façon à empêcher un contact entre les organes de fixation (34) et ce rebord (15) du carter d'huile (14), afin d'isoler ainsi ce dernier de tout contact, transmettant les vibrations, avec le bloc-cylindres (11) et les organes de fixation (34) qui y sont fixés.

2. Moteur suivant la revendication 1, caractérisé en outre en ce que les parties cylindriques (30) du joint d'étanchéité (20) qui s'étendent au-dessous du rebord (15) du carter d'huile présentent des bords inférieurs plus larges, formant des éléments de retenue (31) en forme de bourrelet, afin de fixer le joint d'étanchéité (20) sur le rebord (15) du carter d'huile (14) avant l'assemblage de ce dernier sur le bloc-cylindres (11).

3. Moteur suivant la revendication 2, caractérisé en outre par le fait que les trous (28) du joint d'étanchéité (20) sont dimensionnés de façon à serrer les parties de corps des organes de fixation (34) et à retenir ainsi ces derniers dans la position d'assemblage sur le carter d'huile (14) avant assemblage sur le bloc-cylindres (11).

4. Moteur suivant l'une quelconque des revendications 1 à 3, caractérisé en outre par le fait qu'il est prévu des moyens d'isolation (35) comprenant des éléments élastiques de soutien (39) qui sont disposés au-dessous du rebord (15) du carter d'huile et au contact de ce rebord et sont traversés par des trous alignés avec chacun des trous (22) du rebord et qui reçoivent le contact des organes de fixation (34) et sont comprimés par ceux-ci de façon à porter le carter d'huile (14) et en ce que les organes de fixation (34) comportent chacun une partie de corps plus large qui prend appui sur la paroi (12) du bloc-cylindres en un emplacement contigu au trou (23) de ce dernier, de façon à limiter la compression du joint d'étanchéité (20) et des moyens d'isolation (35).

5. Moteur suivant la revendication 4, caractérisé en outre en ce que les moyens d'isolation (35) comprennent des rondelles sandwich comportant chacune deux éléments de rondelle métallique (38) séparés par un élément élastique de soutien (39), les trous traversant les éléments de soutien (39) étant d'un diamètre plus petit que les trous alignés ménagés dans les éléments de rondelle métallique (38), afin d'empêcher un contact entre ces derniers et les organes de fixation (34).

## Ansprüche

1. Motor mit einem Motorgehäuse (11), das eine Umfangswand mit einer Untergeite umfapt, die eine Befestigungsfläche (12) und Öffnungen (23) durch die Fläche aufweist, mit einer nach unten geschlossenen Ölwanne (14), die einen Umfangsflansch (15) aufweist, der von offenen oberen Rändern der Ölwanne (14) nach außen verläuft und an der Befestigungsfläche (12) der Motorgehäusewand dieser gegenünberliegend und gegen diese abgedichtet befestigt ist, wobei der Flansch (15) Öffnungen (22) aufweist, die mit den Öffnungen (23) des Motorgehäuses ausgerichtet sind, und mit Befestigungselementen (34), die durch die ausgerichteten Öffnungen (22, 23) verlaufen, um die Ölwanne (14) am Motorgehäuse (11) zu befestigen, mit einer Vorrichtung zur schalldämpfenden, schwingungsabsorbierenden Befestigung der Ölwanne am Motorgehäuse, welche eine elastische, schwingungsabsorbierende Abdichtung (20) aufweist, die zwischen dem Flansch (15) der Ölwanne und der Befestigungsfläche (12) der Motorgehäusewand eingepreßt ist, wobei die Abdichtung (20) ein Band aus schwingungsabsorbierendem, elastischem Material mit oberen (24) und unteren (27) Flächen umfaßt, sowie mehrere der Länge nach in Abständen angeordnete Öffnungen (28) für die Befestigungselemente aufweist, die durch die oberen (24) und unteren (27) Flächen der Abdichtung (20) verlaufen und mit den Öffnungen (22, 23) im Flansch (15) der Ölwanne und im Motorgehäuse (11) ausgerichtet sind,
**dadurch gekennzeichnet,**
daß die Abdichtung (20) zylindrische Abschnitte (30) umfaßt, die sich unterhalb der unteren Flächen (27) um die Öffnungen (28) für die Befegtigungselemente, vollständig durch die jeweiligen Flanschöffnungen (22) um die jeweiligen Teilstücke der Befestigungselemente, sowie unterhalb des Flansches (15) der Ölwanne erstrecken, um einen Kontakt zwischen den Befestigungselementen (34) und dem Flansch (15) der Ölwanne zu vermeiden, und dadurch die Ölwanne (14) von einer schwingungsübertragenden Verbindung mit dem Motorgehäuse (11) und den angebrachten Befestigungselementen (34) zu isolieren.

2. Motor nach Anspruch 1, **dadurch gekennzeichnet**, daß die zylindrischen Abschnitte (30) der Abdichtung (20), die sich unterhalb des Flangches (15) der Ölwanne erstrecken, verbreiterte untere Ränder aufweisen, die dichtungsringähnliche Haltevorrichtungen (31) bilden, um die Abdichtung (20) am Flansch (15) der Ölwanne zu befestigen, bevor die Ölwanne (14) an das Motorgehäuse (11) montiert wird.

3. Motor nach Anspruch 2, **dadurch gekennzeichnet**, daß die Öffnungen (28) in der Abdichtung (20) derart bemessen sind, daß sie die Teilstücke dar Befestigungselemente (34) umgreifen und dadurch die Befestigungselemente (34) vor der Montierung an das Motorgahäuse (11) so an der Ölwanne (14) halten, wie sie eingesetzt wurden.

4. Motor nach Anspruch 1, 2 oder 3, **dadurch gekennzeichnet,** daß Trennvorrichtungen (35) vorgesehen sind, die elastische Halteelemente (39) umfassen, welche unten angeordnet sind und in den Flansch (15) der Ölwanne eingreifen, wobei diese durch diese gehende Öffnungen aufweisen, die mit jeder der Flanschöffnungen (22) ausgerichtet sind, und durch die Befestigungselemente (34) in Eingriff genommen und zusammengedrückt werden, um die Ölwanne (14) zu halten, und daß die Befestigungselemente (34) ein vergrößertes Teilstück aufweisen, das angrenzend an die Öffnungen des Motorgehäuses (23) gegen die Wand (12) des Motorgehäuses anliegt, um das Zugammendrücken der Abdichtung (20) und dar Trannvorrichtungen (35) einzuschränken.

5. Motor nach Anspruch 4, **dadurch gekennzeichnet**, daß die Trennvorrichtungen (35) übereinander angeordnete Scheiben mit einem Paar von metallischen Scheibenelementen (38) umfassen, die durch die elastischen Halteelemente (39) getrennt sind, wobei die Öffnungen durch die Halteelemente (39) einen geringeren Durchmesser aufweisen als ausgerichtete Öffnungen in den metallischen Scheibenelementen (38), um einen Kontakt zwischen den metallischen Scheibenelementen (38) und den Befestigungselementen (34) zu verhindern.

Fig. 1

Fig. 2

Fig. 3

Fig. 4

Fig. 5

Fig. 6

Fig. 7

Fig. 8

Fig. 9